Europäisches Patentamt

European Patent Office

Office européen des brevets

(19)

(11) Veröffentlichungsnummer: **0 217 273**
**B1**

(12) EUROPÄISCHE PATENTSCHRIFT

(45) Veröffentlichungstag der Patentschrift:
21.03.90

(21) Anmeldenummer: 86113096.1

(22) Anmeldetag: 23.09.86

(51) Int. Cl.⁴: **G11B 5/265**, G11B 5/115

(54) Kombinierter Schreib/Lesekopf für Magnetschichtspeicher und Verfahren zu seiner Herstellung.

(30) Priorität: 26.09.85 DE 3534389

(43) Veröffentlichungstag der Anmeldung:
08.04.87 Patentblatt 87/15

(45) Bekanntmachung des Hinweises auf die Patenterteilung:
21.03.90 Patentblatt 90/12

(84) Benannte Vertragsstaaten:
AT CH DE FR GB IT LI SE

(73) Patentinhaber: Siemens Aktiengesellschaft,
Wittelsbacherplatz 2, D-8000 München 2(DE)

(72) Erfinder: Kappl, Günter, Sudetenstrasse 44,
D-8016 Feldkirchen(DE)
Erfinder: Rehbach, Norbert, Dipl.-Ing.,
Benediktstrasse 30, D-8021 Hohenschäftlarn(DE)
Erfinder: Hödl, Maximilian, Dr.rer.nat., Neubiberger
Strasse 14, D-8000 München 83(DE)

(56) Entgegenhaltungen:
DE-A- 1 424 557
DE-A- 1 514 119
FR-A- 1 293 990
FR-A- 1 587 251
GB-A- 1 373 096
GB-A- 1 440 341
US-A- 3 701 858
US-A- 3 718 776
US-A- 3 744 040

PATENTS ABSTRACTS OF JAPAN, Band 1,
Nr. 49 (E-76)[3043], 13. Mai 1977; &
JP-A-51 144 216 (HITACHI SEISAKUSHO
K.K.) 11-12-1976
PATENTS ABSTRACTS OF JAPAN, Band 4,
Nr. 15 (E-170), 5. Februar 1980, Seite 37 E 170 ; &

(56) Entgegenhaltungen: (Fortsetzung)
JP-A-54 155 810 (TOKYO DENKI KAGAKU KOGYO
K.K.) 08-12-1979

## Beschreibung

Die Erfindung bezieht sich auf einen kombinierten Schreib/Lesekopf für Magnetschichtspeicher gemäß dem Oberbegriff des Hauptanspruches und auf ein Verfahren zu seiner Herstellung.

Mit Magnetköpfen werden bekanntlich Informationen repräsentierende elektrische Spannungen in magnetische Zustände auf Datenträgern umgewandelt bzw. beim Abtasten des Datenträgers aus den magnetischen Zuständen wieder die elektrischen Spannungen zur weiteren Verarbeitung und Rückgewinnung der Informationen gelesen. Häufig ist es dabei üblich, einen Schreibvorgang mit einem quasi gleichzeitigen Lesevorgang zu koppeln, um etwaige Fehler beim Einspeichern sofort korrigieren zu können. Zu diesem Zweck werden kombinierte Schreib/Leseköpfe verwendet, bei denen die Luftspalte des Schreibkopfes bzw. des Lesekopfes, möglichst nahe beieinander liegend, in einem definierten Abstand in Abtastrichtung angeordnet sind.

Um die Forderung nach einem minimalen und gleichzeitig definierten Abstand der Luftspalte erfüllen zu können, ist es bekannt, den kombinierten Schreib/Lesekopf in drei Teile zu gliedern, nämlich in je einen Halbkopf für Schreiben bzw. Lesen, die aus C-Kernblechen aufgebaut sind und in einen I-Kernblock mit spiegelbildlich angeordneten I-Kernen, die die zweite Hälfte des Schreibkopfes bzw. des Lesekopfes bilden. Die beiden I-Kerne stehen zueinander in einem definierten Abstand, der durch ein Abschirmpaket ausgefüllt ist, um eine Streufeldinduktion vom Schreib- zum Lesekopf möglichst weitgehend zu unterdrücken. Dieses Abschirmpaket besteht aus abwechselnden Lagen von hochpermeablen bzw. elektrisch gut leitenden Metallfolien, die untereinander und mit den I-Kernen verklebt sind. Bei kommerziellen Geräten der Datenverarbeitung, insbesondere Magnetbandgeräten werden die Daten parallel in Form eines Datenbytes gespeichert bzw. gelesen. In diesen Fällen ist dann der Schreib/Lesekopf als Mehrspurkopf ausgebildet, der einen Magnetkopfsatz von neun nebeneinanderliegenden Schreib/Leseköpfen aufweist.

Wegen der hohen Spurdichte bei heutigen magnetischen Speichern der kommerziellen Datenverarbeitung kommt dem Aufbau des entsprechenden Kernblockes für die einwandfreie Funktion des kombinierten Schreib/Lesekopfes eine hohe Bedeutung zu. Neben anderen Faktoren spielt dabei die den Abstand der Luftspalte des Schreib/Lesekopfes mitbestimmende Dicke des Abschirmpaketes, sowie seine Planparallelität eine wichtige Rolle. Außerdem müssen die einzelnen Metallfolien, um eine einwandfreie Abschirmung zu gewährleisten, untereinander fehlerfrei elektrisch isoliert sein. Diese Funktion muß von den Klebeschichten zwischen den Metallfolien neben der eigentlichen Haftfunktion außerdem erfüllt werden. Bedenkt man weiterhin, daß ein Magnetkopf in kommerziellen magnetischen Speichergeräten einer relativ hohen wechselnden Temperaturbelastung ausgesetzt ist, dann wird deutlich, daß die Klebeverbindungen im I-Kernblock problematisch sind.

Es hat daher nicht an Versuchen gefehlt, diese Klebeverbindungen sowohl hinsichtlich ihrer Haftfestigkeit als auch ihrer Isoliereigenschaft zu verbessern. Üblicherweise werden dabei flüssige Epoxidharzkleber mehr oder minder wäßriger Konsistenz eingesetzt, mit denen die vorbehandelten Metallfolien üblicherweise durch Auftragen möglichst gleichmäßig beschichtet werden. Nach der Beschichtung werden abwechselnd hochpermeable bzw. elektrisch leitfähige Metallfolien abwechselnd in einer Vorrichtung zwischen außen liegenden, metallischen Seitenplatten übereinander geschichtet. Der so vorbereitete Rohling des Kernblockes wird dann in der Vorrichtung unter Druck und bei erhöhter Temperatur ausgehärtet. Während des Aushärtens liegt der Kernblockrohling zwischen Abstandsklötzen in der Vorrichtung, damit ein definiertes Endmaß erzielt wird. Trotzdem ist es unvermeidbar, daß zu Beginn des Aushärtevorganges überschüssiger Kleber seitlich herausquillt und an den Oberflächen des Kernblockrohlings aushärtet. Es müssen daher auch Maßnahmen getroffen werden, die das Austreten des überschüssigen Klebers bzw. dessen nachteilige Folgen für die nachfolgende Bearbeitung des Kernblockrohlings möglichst begrenzen.

Bei all diesen Einflußgrößen ist es verständlich, daß trotz langer Versuchsreihen völlig befriedigende Klebeverbindungen für die Kernblockrohlinge bisher noch nicht gefunden sind. Das Spektrum der bisherigen Lösungen läßt sich etwa wie folgt zusammenfassen. Mit Klebern von beinah wäßriger Konsistenz läßt sich zwar ein relativ gleichmäßiger und auch erwünscht dünner Klebefilm aufbringen, der aber in bezug auf die Isolierfähigkeit insbesondere dann problematisch ist, wenn die Rauhtiefe der Metallfolien nicht ausreichend gering ist. Andererseits aber ist immer eine bestimmte Rauhtiefe bei zu verklebender Oberflächen erwünscht, um die Haftfestigkeit des Klebers zu verbessern. Klebeverbindungen basierend auf Klebern mit wäßriger Konsistenz ergeben sehr harte Klebeschichten, die aber gegenüber unter Temperatureinflüssen wechselnde Spannungen empfindlicher sind.

Mit zähflüssigen Epoxidharzklebern lassen sich dagegen Klebeschichten aufbringen, die im ausgehärteten Zustand bereits in der Größenordnung der Dicke der Metallfolien liegen. Damit wird das Problem der elektrischen Isolierung im Schichtaufbau der Metallfolien zwar sicher beherrscht, wegen des vorgegebenen Endmaßes für das Abschirmpaket geht dies aber zu Lasten der Anzahl von Metallfolien, was nicht ohne Einfluß auf die Übersprechdämpfung bleibt. Dazu kommt rein mechanisch, daß sich der hohe Anteil des Klebers an der Gesamtdicke des Abschirmpaketes auch auf die Stabilität des Kernblockes auswirkt. Vergröbert betrachtet, ergibt sich eine Struktur, bei der die durch das Abschirmpaket miteinander verklebten I-Kerne gewissermaßen aufeinander schwimmen. Das erweist sich bereits beim Aushärten, aber auch bei der nachfolgenden mechanischen Bearbeitung des Kernblockes als unvorteilhaft. Schließlich ist auch der hohe Kleberanteil im Kopfspiegel, d. h. der dem Speichermedium zugekehrten Oberfläche des Schreib/Lesekopfes sowohl für die mechanische Bearbeitung bei der Herstellung als auch im Gebrauch des Schreib/Lesekopfes von Nachteil.

In herkömmlicher Weise hergestellte Kernblöcke, bei denen zähflüssige Epoxidharzkleber verwendet werden, weisen darüber hinaus die Nachteile auf, daß sich mit dem flüssig aufgetragenen Kleber keine gleichmäßig dicken Klebeschichten erreichen lassen und die gewünschte Planparallelität der Kernblockseitenwände entweder schon nicht mit ausreichender Genauigkeit erreichbar oder dann doch nicht dauerhaft ist.

Dies gilt, obwohl das Verpressen und Aushärten eines paketierten Kernblockes unter Beilage von Abstandsklötzen erfolgt. Diese Abstandsklötze bestimmen zwar ein Endmaß des ausgehärteten Kernblockrohlings, die durchschnittliche Dicke der Kleberschichten ist dabei aber zusätzlich von den Dickentoleranzen der Metallfolien abhängig. Wegen dieser verschiedenen Einflußgrößen ist daher ein gleichmäßiger Schichtaufbau von gleichbleibender Qualität mit der konventionellen Herstellungstechnologie nicht zu erreichen.

Weiterhin ist es seit langem, beispeilsweise aus DE-Al 1 514 119 bekannt, für die Herstellung von Kernpaketen für Leistungstransformatoren ein Mehrschichtenblech zu verwenden. Dieses Mehrschichtenblech ist aus vorzugsweise zwei Teilblechen mit einer Dicke von 0,1 bis 0,3 mm zusammengesetzt, die untereinander verklebt sind. Das Klebemittel kann nach der bekannten Lehre fest, flüssig, teigig, in Form einer Folie, als Lösung oder Aufschwemmung auf die Teilbleche aufgebracht und die Verbindung durch eine Wärme- und/oder Walzbehandlung erzielt werden.

Für das hier vorliegende Problem bietet diese bekannte Lehre keine Anregung, da bereits um eine Größenordnung andere Randbedingungen vorliegen, im Vergleich zu mindestens 0,1 bis 0,3 mm dicken Transformatorblechen sind die Metallfolien bei Magnetköpfen der hier vorliegenden Art etwa 50 μm dick. Entsprechend gering darf dann auch nur die Klebeschichtdicke sein, wie oben erläutert wurde. Außerdem gibt die bekannte Lehre keinerlei spezifische Hinweise, unter welchen Randbedingungen welches der genannten Klebeverfahren besonders zweckmäßig sein könnte.

Der Erfindung liegt daher die Aufgabe zugrunde, einen I-Kernblock für einen kombinierten Schreib/-Lesekopf zu schaffen, der bei Anwendung einer verbesserten Klebetechnik einfacher und kostengünstiger herzustellen ist und zugleich den mechanischen und elektromagnetischen Anforderungen vollauf genügt. Insbesondere ist also die Erfindung auch darauf gerichtet, ein neues Verfahren zum Herstellen eines solchen I-Kernblockes anzugeben, mit dem das geforderte Ergebnis erzielbar ist.

Bei einem kombinierten Schreib/Lesekopf der eingangs genannten Art wird diese Aufgabe erfindungsgemäß durch die im Kennzeichen des Patentanspruches 1 beschriebenen Merkmale gelöst.

Wie eine Erprobung gezeigt hat, lassen sich an sich bekannte, zunächst für die Herstellung von flexiblen Leiterplatten entwickelte Klebefolien auf Epoxidharzbasis überraschenderweise mit vollem Erfolg auch für die Verklebung der Metallfolien des Abschirmpaketes bei einem I-Kernblock eines kombinierten Schreib/Lesekopfes einsetzen. Diese Klebefolien werden normalerweise auf einen Papierträger aufgerollt geliefert und lassen sich im Lieferzustand ohne weiteres auf die Maße der Metallfolien beschneiden.

Gemäß einer Weiterbildung der Erfindung ist ein Verfahren zum Herstellen eines Kernblockes für einen kombinierten Schreib/Lesekopf durch die Kombination der im Kennzeichen des Patentanspruches 4 beschriebenen Verfahrensschritte gekennzeichnet. Gegenüber den konventionellen Herstellungsmethoden unter Verwendung eines flüssigen Klebers ist damit die Möglichkeit gegeben, das Zusammenstellen des Abschirmpaketes auf ein einfaches Aufeinanderschichten nach einem vorgegebenen Schichtschema zu reduzieren. Die beschnittenen Klebefolien werden von dem Papierträger abgelöst und jeweils zwischen die Metallfolien eingelegt.

Offensichtlich ist diese Herstellungsmethode von großem Vorteil, denn es brauchen keine Topfzeiten eines flüssigen Klebers beachtet zu werden, die Ausbeute ist sehr hoch, da kein Kleberverlust auftritt und die Herstellung ist wesentlich sauberer, da beim Aushärten kein Kleber austritt und in die Paketiervorrichtung gelangen kann. Deshalb erübrigen sich auch die bei konventionellen Herstellungsmethoden angewandten Maßnahmen zum Verhindern des Festbackens während des Aushärtens austretenden Klebers in der Vorrichtung. Somit ist das angegebene Herstellungsverfahren auch kostengünstiger als die bisherigen Herstellungsmethoden.

Weiterhin lassen sich durch die Verwendung von Klebefolien mit gleichmäßiger Schichtdicke auch gleichmäßig dünne Klebeschichten mit einer hohen Festigkeit der Klebeverbindung schaffen. Für eine nachfolgende Bearbeitung des Kernblockrohlings ist dies besonders wichtig, da wegen der Steifigkeit des Abschirmpaketes keine Verformungen auftreten. Außerdem ist eine hohe Oberflächengüte, insbesondere am Kopfspiegel erzielbar. Wegen der mechanischen Handhabung beim Paketieren ist eine gewisse Mindestschichtdichte der Klebefolien vorauszusetzen, die noch ein Mehrfaches der für die elektrische Isolation notwendigen · Schichtdicke ist. Damit ergibt sich eine hohe Sicherheit hinsichtlich dieser elektrischen Eigenschaft, so daß die Rauhtiefe der verwendeten Metallfolien nicht mehr so kritisch ist. Die Aushärteparameter Druck, Temperatur und Zeit lassen sich so einstellen, daß der Aushärtevorgang gleichmäßig erfolgt und die gewünschte Planparallelität der I-Kernblockrohlinge in einem hohen Grade erzielbar ist, was die nachfolgende mechanische Bearbeitung vereinfacht.

Ein Ausführungsbeispiel der Erfindung wird im folgenden anhand der Zeichnung näher beschrieben. Dabei zeigt

Fig. 1 in schematischer Form den bekannten Aufbau eines Mehrspurkopfes, bei dem zwischen einem Lesehalbkopf und einem Schreibhalbkopf ein I-Kernblock angeordnet ist,

Fig. 2 einen Teilschnitt durch den I-Kernblock des Schreib/Lesekopfes von Fig. 1,

Fig. 3 die Prinzipdarstellung einer Vorrichtung zum Aushärten eines paketierten I-Kernblockrohlings und

Fig. 4 als das in Fig. 3 mit A bezeichnete Detail ein Schichtschema des Kernblockrohlings.

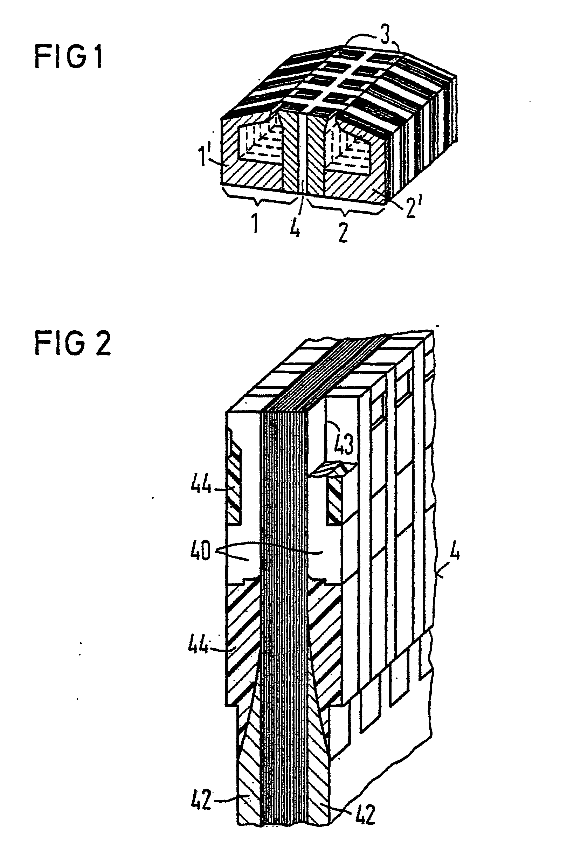

Der in Fig. 1 schematisch dargestellte kombinierte Schreib/Lesekopf ermöglicht unter anderem gleichzeitiges Schreiben und Kontrollesen, da jede Kopfeinheit aus je einem nebeneinander angeordneten Lesekopf 1 bzw. Schreibkopf 2 besteht. Für den Einsatz bei einem kommerziellen Magnetbandgerät in der Datenverarbeitung ist dieser kombinierte Magnetkopf als Mehrspurkopf ausgebildet, bei dem der Magnetkopfsatz aus einer Mehrzahl von hintereinander angeordneten Paaren von Leseköpfen 1 und Schreibköpfen 2 besteht.

Um die angedeutete Betriebsfunktion von Schreiben mit gleichzeitigem Kontrollesen und damit einer Möglichkeit der Korrektur eines fehlerhaften Schreibvorganges durchführen zu können, ist es notwendig, daß die beiden Luftspalte 3 des Lesekopfes 1 bzw. des Schreibkopfes 2 möglichst nahe nebeneinanderliegen. Dies erreicht man durch entsprechende Formgebung und Zweiteilung der ferromagnetischen Kerne der Magnetköpfe. In der schematischen Darstellung von Fig. 1 erkennt man deutlich die Gliederung des kombinierten Schreib/Lesekopfes in drei Teile. Er weist einen Lesehalbkopf 1' und einen Schreibhalbkopf 2' auf, die beide aus C-Kernen aufgebaut sind. Zwischen diesen Halbköpfen ist ein I-Kernblock 4 angeordnet, dessen I-Kerne den Lesehalbkopf 1' bzw. den Schreibhalbkopf 2' zu vollständigen Köpfen ergänzen. Wie noch näher gezeigt wird, sind beide I-Kerne durch ein Abschirmpaket voneinander getrennt, das die über den Luftspalten 3 entstehenden magnetischen Streufelder bündelt und damit für ausreichende Übersprechdämpfung sorgt.

In Fig. 2 ist in einem Teilschnitt eine Ausführungsform eines I-Kernblockes 4 im Detail dargestellt. Daraus sind die beiden spiegelbildlich zueinander angeordneten I-Kerne 40 zu erkennen, zwischen denen das Abschirmpaket 41 liegt. Im Rohzustand ist das Abschirmpaket 41 zu beiden Seiten durch Seitenplatten 42 aus elektrisch leitfähigem Material abgedeckt. In diesen planparallelen Block werden, wie in Fig. 2 schematisch angedeutet, Nuten 43 eingefräst, die dann je einen I-Kern aufnehmen, der durch Gießharz 44 in der Nut festgelegt wird.

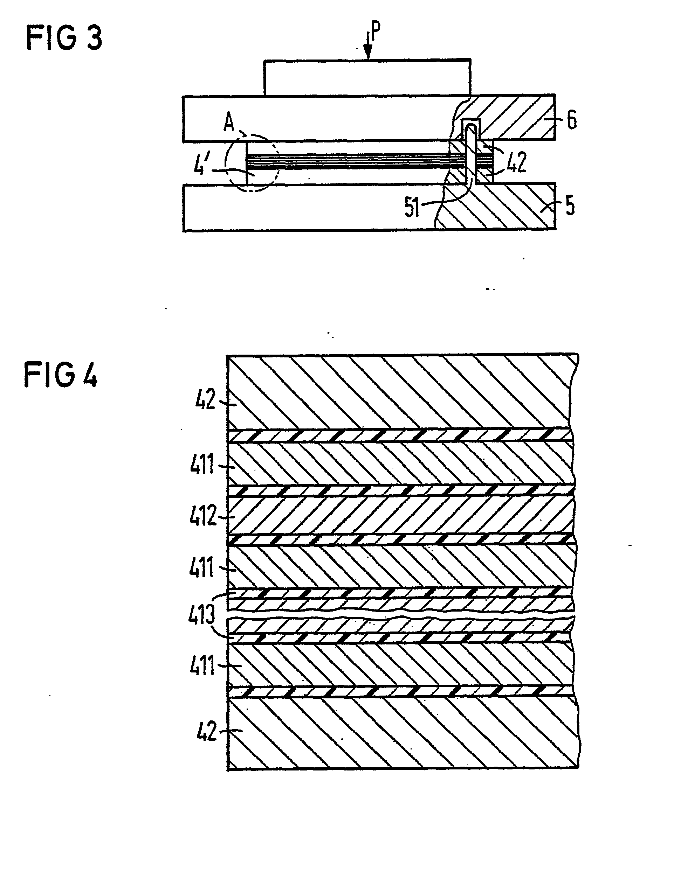

Anhand der Fig. 3 und 4 wird nun der Aufbau und die Herstellung eines solchen Rohlings des I-Kernblockes 4 näher erläutert. Die in Fig. 3 teilweise aufgeschnitten dargestellte Montagevorrichtung weist eine Grundplatte 5 mit Aufnahmedornen 51 auf, auf die die einzelnen Schichten des I-Kernblockrohlings aufgesteckt werden. Nach dem in Fig. 4 dargestellten Schichtschema besteht das zwischen die Seitenplatte 42 eingelegte Abschirmpaket 41 aus abwechselnd übereinandergeschichteten Metallfolien 411 und 412 mit hoher elektrischer Leitfähigkeit bzw. mit hoher Permeabilität. Zwischen die einzelnen metallischen Schichten sind Klebefolien 413 eingelegt, die gleichzeitig die Metallfolien 411, 412 elektrisch isolieren.

Die Seitenplatten 42 bestehen aus einem elektrisch leitfähigem Material, vorzugsweise Messing und sind vor der Montage rauhplaniert und glühbehandelt. Für die Metallfolien 411 mit hoher elektrischer Leitfähigkeit wird eine Kupferfolie mit einer Schichtdicke von beispielsweise 50 µm herangezogen. Die Metallfolien 412 hoher Permeabilität sind dann ebenfalls etwa 50 µm dick und bestehen vorzugsweise aus Mu-Metall. Alle Metallteile des I-Kernblockrohlings 4' werden vor dem Paketieren durch Anbeizen aktiviert und anschließend beispielsweise in einem Ultraschall-Freonbad entfettet und getrocknet. Die aktivierten Teile müssen bald verarbeitet werden, damit sich nicht wieder eine Passivierungsschicht bildet.

Als Klebefolie 413 wird vorzugsweise eine handelsübliche Epoxidharzfolie verwendet, wie sie z. B. unter der Produktbezeichnung Poly Cast EC Serie 410 von dem Hersteller Fortin, San Fernando, USA angeboten wird. Klebefolien dieser Art sind besonders für die Leiterplattenherstellung entwickelt und werden üblicherweise auf eine Papierschicht als Träger aufgesetzt, in Rollen geliefert. In dieser Lieferform ist die Klebefolie bei Raumtemperatur lagerfähig, schneid- und stanzbar. Beim Schichten werden die auf Endmaß geschnittenen und gelochten Klebefolien 413 von dem Papierträger abgezogen und zwischen die einzelnen metallischen Schichten 42, 411 bzw. 412 des I-Kernblockrohlings 4' eingelegt. Da die Klebefolie 413 eine gleichmäßige Schichtdicke aufweist, wäre zum Zwecke der Isolierung an sich nur eine Schichtdicke von wenigen Mikrometern erforderlich. Derartig dünne Kunststofffolien lassen sich jedoch schlechter verarbeiten, deshalb wird hier eine Schichtdicke von nicht weniger als 10 µm, vorzugsweise von 12,5 µm verwendet.

Wie Fig. 3 schematisch zeigt, ist der auf die Grundplatte 5 lose aufgeschichtete I-Kernblockrohling 4' durch eine Druckplatte 6 abgedeckt, die zum Aushärten einen Preßdruck P aufnimmt. Der Aushärtevorgang läuft nach einer entsprechenden Vorwärmzeit in etwa 45 bis 60 min ab, die den Eigenschaften der Klebefolie 413 angepaßte Aushärtetemperatur beträgt etwa 170°C. Diese Temperatur liegt weit unter der kritischen Temperatur für die Mu-Metallfolien 412. Auch die Höhe des Preßdruckes ist unkritisch. Er kann in einem Bereich von 10 bis 30 kp/cm² liegen, was im vorliegenden Fall einer Andruckkraft von etwa 85 bis 250 kp entspricht. Während des Aushärtens schwindet die Schichtdicke der plastifizierten Klebefolien auf ein Endmaß von etwa 10 µm. Bei den vorgegebenen Aushärteparametern tritt seitlich aus dem I-Kernblockrohling 4' kein Kleber aus. Deshalb wird der Aushärtevorgang auch ohne zwischen die Grundplatte 5 und die Druckplatte 6 eingelegte Abstandsklötze durchgeführt.

Der ausgehärtete I-Kernblockrohling 4' ist aufgrund des Herstellvorganges und seiner Struktur mit hoher Genauigkeit planparallel. Da auch während des Aushärtens seitlich kein Kleber austritt, bleibt die Montagevorrichtung sauber, es müssen also keine besonderen Vorkehrungen getroffen werden, die ein anschließendes Säubern der Montagevorrichtung für eine Wiederverwendung erleichtern. Außerdem verbessert dieser Zustand des ausgehärteten I-Kernblockrohlings 4' seine nachfolgende Bearbeitbarkeit.

Fertigungstechnisch ist dies von erheblicher Bedeutung, da es immer kritisch ist, eine Verbundstruktur von Materialien verschiedener Eigenschaften, z. B. unterschiedlicher Härte und Temperaturbeständigkeit gemeinsam zu bearbeiten. Dies gilt insbesondere auch im vorliegenden Anwendungsfall, wenn hohe Oberflächengüten vor allem im Bereich des Kopfspiegels gefordert werden.

## Patentansprüche

1. Kombinierter Schreib/Lesekopf zur Verwendung mit einem relativ dazu bewegten magnetischen Speichermedium, bei dem zwischen einem Schreibhalbkopf (2') und einem Lesehalbkopf (1'), beide aus C-Kernen aufgebaut, ein Kernblock (4) mit I-förmigen Kernen angeordnet ist, der zwei, jeweils eine Kernhälfte tragende Seitenplatten (42) und ein dazwischen liegendes Abschirmpaket (41) aus einer Vielzahl von abwechselnd geschichteten und untereinander isolierend verklebten hochpermeablen bzw. elektrisch leitfähigen Metallfolien (412, 411) aufweist, dadurch gekennzeichnet, daß die Seitenplatten (42) und die abwechselnd geschichteten Metallfolien (411 bzw. 412) bei einer Schichtdicke im Bereich von 40 bis 60 μm durch jeweils dazwischen eingelegte, aus einem Epoxidharz bestehende Klebefolien (413) mit einer Schichtdicke im Bereich von 10 bis 15 μm als Ausgangsmaß untereinander verklebt sind.

2. Kombinierter Schreib/Lesekopf nach Anspruch 1, dadurch gekennzeichnet, daß das Ausgangsmaß der Schichtdicke der Klebefolie (413) etwa 12 μm beträgt.

3. Kombinierter Schreib/Lesekopf nach einem der Ansprüche 1 oder 2, gekennzeichnet durch seine Ausbildung als Mehrspurkopf mit einer Mehrzahl von Schreib/Lesekopfeinheiten in paralleler, elektrisch und magnetisch voneinander getrennter Anordnung.

4. Verfahren zum Herstellen eines Kernblockes (4) für einen kombinierten Schreib/Lesekopf mit einem Schreib- bzw. einem Lesehalbkopf (2', 1'), die einander gegenüberstehend zu beiden Seiten des Kernblockes angeordnet sind, der seinerseits zwei, jeweils die zweite Kernhälfte des Schreib- bzw. des Lesekopfes tragende Seitenplatten (42) mit einem dazwischen liegenden Abschirmpaket (41) aus einer Vielzahl von abwechselnd geschichteten und untereinander isolierend verklebten hochpermeablen bzw. elektrisch leitfähigen Metallfolien (412, 411) aufweist, gekennzeichnet durch die Kombination der Verfahrensschritte:

 a) Aktivieren der rauhplanierten und glühbehandelten Seitenplatten (42) und Metallfolien (411 bzw. 412) mit einer Schichtdicke im Bereich von 40 bis 60 μm,
 b) Entfetten und Trocknen der aktivierten Seitenplatten bzw. Metallfolien,
 c) Zusammenstellen des Kernblockes in einer Montagevorrichtung (5, 6) durch abwechselndes Übereinanderschichten der Metallfolien (411 bzw. 412) unter Zwischenlage von je einer Klebefolie (413) aus Epoxidharz und mit einer Schichtdicke im Bereich von 10 bis 15 μm,
 d) Aushärten des lose geschichteten Kernblockrohlings unter Druck im Bereich von 1 bis 3 N/mm² bei erhöhter Temperatur von etwa 170° C in der Montagevorrichtung,
 e) Abkühlen des ausgehärteten Kernblockrohlings (4') und
 f) mechanisches Bearbeiten des Kernblockrohlings und Montieren der zweiten Kernhälften (40) des Schreib- bzw. des Lesehalbkopfes (1' bzw. 2') auf beiden Außenseiten des bearbeiteten Kernblockrohlings.

5. Verfahren nach Anspruch 4, dadurch gekennzeichnet, daß nach einer Vorwärmzeit während des Aushärtens Druck und Temperatur für einen Zeitraum von 45 bis 60 min aufrechterhalten werden, bevor eine gleichmäßige Abkühlung erfolgt.

## Claims

1. Combined read/write head for use with a magnetic storage medium which is mobile in relation to it, in which, between a write half head (2') and a read half head (1'), both constructed from C-cores, there is a core block (4) arranged with I-shaped cores, which core block has two side plates (42), bearing in each case one core half, and a screening pack (41) lying between these consisting of a multiplicity of alternately layered and mutually insulating metal foils (412, 411) bonded together to be highly permeable and electrically conductive, characterized in that the side plates (42) and the alternately layered metal foils (411 and 412) with a layer thickness in the region of 40 to 60 μm are bonded to one another as the starting quantity by means of adhesive films (413) consisting of an epoxy resin and in each case laid between these and having a layer thickness in the region of 10 to 15 μm.

2. Combined read/write head according to Claim 1, characterized in that the starting quantity of the layer thickness of the adhesive film (413) is approximately 12 μm.

3. Combined read/write head according to one of Claims 1 or 2, characterized by its design as a multitrack head with a multitude of read/write head units arranged in parallel and electrically and magnetically separated from one another.

4. Process for manufacturing a core block (4) for a combined read/write head having a write and a read half head (2', 1') which are arranged mutually facing each other on both sides of the core block, which for its part has two side plates (42) bearing in each case the second core half of the write or of the read head with a screening pack (41) lying between these and consisting of a multiplicity of alternately layered and mutually insulating metal foils (412, 411) bonded togther to be highly permeable and electrically conductive, characterized by the combination of the process steps:

a) activation of the rough-planished and heat-treated side plates (42) and the metal foils (411 and 412) having a layer thickness in the region of 40 to 60 μm,

b) degreasing and drying the activated side plates and metal foils,

c) assembly of the core block in an assembly device (5, 6) by alternately layering the metal foils (411 and 412) on top of one another with an intermediate layer in each case of one adhesive film (413) consisting of epoxy resin and having a layer thickness in the region of 10 to 15 μm,

d) curing the loosely layered unfinished core block under pressure in the region of 1 to 3 N/mm² at an increased temperature of approximately 170°C in the assembly device,

e) cooling the cured unfinished core block (4') and

f) mechanical processing of the unfinished core block and mounting of the two core halves (40) of the write half head and of the read half head (1' and 2') on both outer sides of the processed unfinished core block.

5. Process according to Claim 4, characterized in that, after an initial heating time, pressure and temperature are maintained for a period of 45 to 60 minutes during the curing process, before a constant cooling occurs.

**Revendications**

1. Tête d'enregistrement/lecture combinée destinée à être utilisée avec un support d'enregistrement magnétique déplacé par rapport à cette tête, et dans laquelle entre une demi-tête d'enregistrement (2') et une demi-tête de lecture (1'), toutes deux constituées par des noyaux en forme de C, se trouve disposé un bloc de noyau (4) comportant des noyaux en forme de I, qui possèdent deux plaques latérales (42) portant chacune une moitié de noyau et un bloc de blindage (41) intercalé, constitué par une multiplicité de feuilles métalliques hautement perméables ou électriquement conductrices (412, 411) empilées en alternance les unes sur les autres et collées de manière à être isolées les unes par rapport aux autres, caractérisée par le fait que les plaques latérales (42) et les plaques métalliques (411 ou 412), empilées d'une manière alternée sont collées entre elles, pour une épaisseur de couche comprise entre 40 et 60 μm, au moyen de feuilles adhésives (413) intercalées respectivement entre les feuilles et constituées par une résine époxy et possédant une épaisseur dans la plage allant de 10 à 15 μm, en tant que cote initiale.

2. Tête d'enregistrement/lecture combinée suivant la revendication 1, caractérisée par le fait que la cote initiale de l'épaisseur de la feuille adhésive (413) est égale à environ 12 μm.

3. Tête d'enregistrement/lecture combinée suivant l'une des revendications 1 ou 2, caractérisée par sa réalisation sous la forme d'une tête à pistes multiples comportant une multiplicité d'unités de têtes d'enregistrement/lecture disposées parallèlement les unes aux autres en étant séparées électriquement et magnétiquement les unes des autres.

4. Procédé pour fabriquer un bloc de noyau (4) pour une tête d'enregistremet/lecture combinée comportant une demi-tête d'enregistrement et une demi-tête de lecture (2', 1'), qui sont disposées en vis-à-vis l'une de l'autre, des deux côtés du bloc de noyau, qui pour sa part comporte deux plaques latérales (42) portant respectivement la seconde moitié de noyau de la tête d'enregistrement ou de la tête de lecture et entre lesquelles est intercalé un bloc de blindage (41) constitué par une multiplicité de feuilles métalliques très perméables ou élecriquement conductrices (412, 411), empilées d'une manière alternée et collées de manière à être isolées les unes des autres, caractérisé par la combinaison des étapes opératoires suivantes:

a) activation des plaques latérales (42) et des feuilles métalliques (411 ou 412), ayant subi un polissage supprimant les rugosités et un traitement de recuit, et possédant une épaisseur dans la plage allant de 40 à 60 μm,

b) dégraissage et séchage des plaques latérales et des feuilles métalliques activées,

c) assemblage du bloc de noyau dans un dispositif de montage (5, 6) au moyen de l'empilage alterné des feuilles métalliques (411 ou 412) moyennant le montage intercalé d'une feuille de colle respective (413, constituée par une résine époxy et possédant une épaisseur dans la plage allant de 10 à 15 μm,

d) durcissement de l'ébauche du bloc de noyau à empilage lâche, moyennant l'application d'une pression dans la plage allant de 1 à 3 N/mm², sous une température accrue d'environ 170°C dans le dispositif de montage,

e) refroidissement de l'ébauche durcie (4') du bloc de noyau, et

f) traitement mécanique de l'ébauche du bloc de noyau et montage des deux moitiés de noyau (40) de la tête d'enregistrement et de la tête de lecture (1, et 2') sur les deux faces extérieures de l'ébauche du bloc de noyau usiné.

5. Procédé suivant la revendication 4, caractérisé par le fait qu'après une durée de préchauffage, la pression et la température sont maintenues pendant un intervalle de temps de 45 à 60 mn, pendant le durcissement, avant la mise en oeuvre d'un refroidissement uniforme.

FIG 1

FIG 2

FIG 3

FIG 4